# DEMANDE DE BREVET EUROPEEN

(11) **EP 0 806 235 A1**
(43) Date de publication de la demande: **12.11.1997**
(21) Numéro de dépôt: 97400977.1
(22) Date de dépôt: 30.04.1997
(51) Int. Cl.: B01D 53/83, B01D 53/10

(54) **Dispositif de traitement de fumées d'incinération ayant un moyen rotatif de recyclage interne**

(30) Priorité: 09.05.1996 FR 9605887
(71) Demandeur: Institut Français du Pétrole, 92852 Rueil-Malmaison Cedex (FR)
(72) Inventeur: Martin, Gérard, 92500 Rueil-Malmaison (FR); Dolignier, Jean-Christophe, 75017 Paris (FR); Flament, Patrick, 78610 Auffargis (FR)

(57) **Abrégé**

Dispositif de traitement de fumées issues notamment d'usines d'incinération comprenant :
- une première zone (7a) ayant une entrée (4a) pour les fumées non traitées et une sortie vers une zone intermédiaire (7c), l'écoulement y étant essentiellement longitudinal ; ladite première première zone comprenant des moyens (9) d'injection d'un absorbant ;
- la zone intermédiaire (7c) dans laquelle l'écoulement change de direction;
- une deuxième zone (7b) ayant une entrée pour les gaz sortant de la zone interne (7c) et une sortie (4b) pour les gaz traités, l'écoulement étant sensiblement longitudinal dans ladite deuxième zone;
caractérisé en ce qu'il comprend en outre un moyen rotatif (6) disposé à la fois à l'entrée de la première zone et à la sortie de la deuxième zone et permettant de capter les particules véhiculées dans les fumées et de les réintroduire à l'entrée de la première zone.

Dispositif selon la revendication 1, caractérisé en ce que le moyen rotatif (6) présente l'ensemble d'ailettes radiales (20) placées parallèlement à l'écoulement dans la première et/ou la deuxième zone.

## Description

La présente invention concerne le domaine du traitement des fumées issues d'usines d'incinération.

Plus particulièrement l'invention concerne l'aspect structurel du traitement plutôt que l'aspect physico-chimique ; l'invention vise en effet à améliorer et donc à rendre plus efficace le contact entre la phase gazeuse et la phase particulaire.

Le problème à l'origine de la présente invention concerne en fait toutes les réactions gaz-solides mettant en oeuvre des produits pulvérulents et dépasse donc de ce fait très largement le cadre du seul traitement de fumées précitées. Lorsque des réactions hétérogènes sont limitées par le processus diffusionnel, on a souvent intérêt à travailler avec des produits très fins, afin d'augmenter la surface de contact et de faciliter l'accès des gaz à l'intérieur des particules. La contre-partie de ce choix est que les fines particules, c'est-à-dire les particules qui ont des dimensions de l'ordre du micron ou de quelques microns, sont très facilement entraînées par la phase gazeuse. Ainsi, dès leur introduction dans le système réactionnel, les fines particules acquièrent presque instantanément une vitesse de déplacement qui est quasiment celle du gaz qui les véhicule. Il en résulte que le temps de séjour des particules dans ledit système réactionnel est presque identique à celui des gaz. Or, cette situation peut être pénalisante lorsque la réaction est lente et exigerait des temps de contact prolongés de la phase solide avec le gaz. Sur le plan de la chimie, les conséquences sont des rendements de conversion médiocres. On peut augmenter le rendement de conversion rapporté à la phase gaz en accroissant le débit de solides, mais cette option est souvent synonyme d'augmentation des coûts opératoires.

Par ailleurs il a déjà été proposé dans le brevet FR 2 669 554 au nom du demandeur de désulfurer des gaz de combustion en fractionnant et en remélangeant plusieurs fois le flux gazeux additionné d'absorbant. Dans le cas plus précis du traitement en voie sèche des fumées des usines d'incinération d'ordures ménagères, l'objectif est essentiellement de capter des polluants acides tel l'acide chlorhydrique, à l'aide d'absorbant comme la chaux. L'opération s'effectue à basse température c'est-à-dire entre 150 et 400°C, parfois en présence d'eau pour améliorer quelque peu les performances, dans des réacteurs de géométrie assez simple.

Un exemple de réacteur est donné dans le brevet FR 2 636 720 où l'on trouve une canalisation munie d'un venturi en amont duquel sont disposés des moyens d'introduction de l'absorbant dans la veine gazeuse à traiter. Le venturi sert à assurer un mélange correct de la poudre avec les gaz. L'absorbant capte les composants acides pendant son séjour dans la canalisation. Le mélange gaz + absorbant achève son parcours dans un dépoussiéreur final, qui peut être un électrofiltre ou un filtre à manches. Le temps de séjour de l'absorbant dans le système est sensiblement identique à celui des fumées et ne dépasse jamais quelques secondes (2 à 3 secondes par exemple).

Pour amener la réaction à son terme dans des conditions de stoechiométrie où le rapport molaire Ca/Cl est de 0,5, il faudrait des temps de séjour beaucoup plus longs. C'est la raison pour laquelle, une fraction seulement de l'absorbant est utilisée. Avec les systèmes actuels, on peut typiquement capter 90% de l'acide chlorhydrique contenu dans des fumées d'usine d'incinération en utilisant des quantités d'absorbant correspondant à un rapport molaire Ca/Cl aux environs de 1 ; ceci signifie qu'à peine la moitié du potentiel de l'absorbant est aujourd'hui utilisé. Dans l'absorbant usé soutiré au dépoussiéreur final, on retrouve donc un mélange de chlorure de calcium et de chaux n'ayant pas réagi. Le résidu de ce traitement n'est donc pas négligeable, puisqu'il représente 40 à 50 kg par tonne d'ordures ménagères traitée. Il se pose donc de plus en plus de problèmes d'élimination, dans un contexte où la mise en décharge est prohibée et où les traitements de stabilisation sont onéreux.

On notera que si l'on veut accroître le taux de captation de l'acide chlorhydrique, il faut très sensiblement augmenter la consommation d'absorbant frais ; ce qui se traduit évidemment par des volumes de résidus plus importants. Pour obtenir des rendements de captation des polluants acides plus élevés, une solution est de passer du traitement sec au traitement humide. Dans ce cas, les rendements de captation de l'acide chlorhydrique sont plus élevés et peuvent atteindre 99%. Cette performance est atteinte avec des consommations d'absorbant réduites, puisqu'on peut alors travailler légèrement au-delà de la stoechiométrie. L'inconvénient de cette option est un coût d'investissement beaucoup plus élevé que dans le cas des traitements en voie sèche, et en pratique, on ne trouve ce type d'installations que sur des unités de très grande capacité.

L'objectif de la présente invention est d'approcher les performances des traitements en voie humide, en continuant à faire du traitement en voie sèche. Pour augmenter le taux de captation des polluants acides, deux solutions sont a priori possibles : d'une part accroître le glissement entre gaz et particules mais alors les lois de la mécanique semblent difficiles à contourner ; ou bien procéder à un recyclage massif de l'absorbant sans faire appel à des moyens de séparation gaz-solides sophistiqués et onéreux. Cette deuxième voie est à la base de la présente invention.

Le concept inventif à la base de la présente invention consiste à travailler avec un moyen spécifique, capable de capter les particules contenues dans l'écoulement sous certaines conditions et de les restituer dans d'autres conditions. Les moyens utilisés sont successivement en contact avec le gaz à traiter puis le gaz traité et ils permettent de réinjecter les particules captées dans le gaz à traiter.

Un premier avantage de l'invention réside dans la capacité du dispositif à assurer un contact prolongé de la phase gazeuse avec les réactifs solides, grâce au recyclage interne des particules. Le taux de recyclage peut être défini comme le rapport massique du débit de solides en recirculation sur le débit de solides apporté par la première zone. Ce rapport peut être compris entre 0,5 et 50 ; ce qui signifie que dans les cas les plus favorables, le temps de séjour des solides sera 50 fois plus important que celui des gaz.

Dans le cas particulier de la déchloruration de fumées d'incinération, le recyclage interne de l'absorbant permet de capter plus de 98%, voire plus de 99% de l'acide chlorhydrique, tout en ayant des consommations d'absorbant qui ne dépassent pas la stoechiométrie de plus de 30%. Le recyclage permet aussi une meilleure utilisation de l'absorbant ; avec deux conséquences positives, d'abord de moindres besoins en absorbant frais, et ensuite, des quantités de résidus à éliminer plus faibles, deux facteurs qui conduisent à une réduction des frais opératoires.

L'invention présente aussi un autre avantage lorsque les concentrations des espèces réactives gazeuses fluctuent dans le temps, et c'est une fois encore le cas avec l'incinération des déchets. En effet, la présence dans la zone réactionnelle d'un très large excès de réactifs solides par rapport aux réactifs gazeux, permet d'écrêter tout dépassement de la concentration de ces derniers.

Un avantage supplémentaire de l'installation selon l'invention est sa souplesse de fonctionnement. L'appareil peut en effet travailler avec des débits de gaz à traiter et des débits de réactifs solides frais très variables. La concentration en solides dans la zone réactionnelle peut être contrôlée à partir du débit de gaz secondaire introduit.

Ainsi, la présente invention a pour objet un dispositif de traitement de fumées issues notamment d'usines d'incinération comprenant :
- une première zone ayant une entrée pour les fumées non traitées et une sortie vers une zone intermédiaire, l'écoulement y étant essentiellement longitudinal ; ladite première zone comprenant des moyens d'injection d'un absorbant;
- la zone intermédiaire dans laquelle l'écoulement change de direction;
- une deuxième zone ayant une entrée pour les gaz sortant de la zone interne et une sortie pour les gaz traités, l'écoulement étant sensiblement longitudinal dans ladite deuxième zone.
Selon l'invention, le dispositif comprend en outre un moyen rotatif disposé à la fois à l'entrée de la première zone et à la sortie de la deuxième zone et permettant de capter les particules véhiculées dans les fumées et de les réintroduire à l'entrée de la première zone.

Selon l'une de ses caractéristiques, le moyen rotatif présente un ensemble d'ailettes radiales placées parallèlement à l'écoulement dans la première et/ou la deuxième zone.

Avantageusement, les ailettes sont recouvertes d'un matériau susceptible de capter et de restituer des particules, tel un matériau rugueux.

Selon un mode de réalisation de l'invention, l'axe longitudinal du dispositif est horizontal et les première et deuxième zones sont disposées l'une à côté de l'autre.

Préférentiellement, les ailettes sont recouvertes sur l'une au moins de leurs faces, de cellules.

Plus précisément les ailettes peuvent être recouvertes sur l'une de leurs faces de cellules orientées de telle sorte qu'elles sont ouvertes vers le haut dans la première zone et ouvertes vers le bas dans la deuxième zone.

Selon un autre mode de réalisation de l'invention, les ailettes sont munies de grilles inclinées vis-à-vis du sens de l'écoulement.

En outre le dispositif selon ce mode de réalisation de l'invention peut comprendre des moyens destinés à faire varier l'espacement angulaire entre les ailettes, selon qu'elles se trouvent dans la première ou dans la deuxième zone du dispositif.

Sans sortir du cadre de l'invention, le dispositif peut comprendre en outre au moins un faisceau de tubes disposés parallèlement à l'écoulement, dans l'une et/ou l'autre des première ou deuxième zones.

Selon un arrangement particulier, le dispositif selon l'invention comprend une enveloppe cylindrique séparée longitudinalement par au moins une première paroi de séparation délimitant les première et deuxième zone, en aval dudit moyen rotatif.

En outre, il comprend une deuxième paroi de séparation disposée en amont du moyen rotatif et dans le même plan que la première paroi de séparation.

Par ailleurs, le moyen rotatif peut être actionné par un moteur à vitesse variable.

D'autres détails, caractéristiques, et avantages de la présente invention apparaîtront plus clairement à la lecture de la description qui va suivre faite à titre illustratif et nullement limitatif en référence aux figures annexées sur lesquelles :
- La figure 1 est une coupe longitudinale d'un premier mode de réalisation selon l'invention;
- La figure 2 est une coupe transversale simplifiée du mode de réalisation selon la figure 1;
- La figure 3 est une coupe transversale simplifiée d'un autre mode de réalisation de l'invention;
- La figure 4A est une vue de coté des ailettes dans une première position;
- La figure 4B est une vue de coté des ailettes ayant une deuxième position; et
- La figure 5 est une coupe longitudinale simplifiée d'encore un autre mode de réalisation de l'invention.

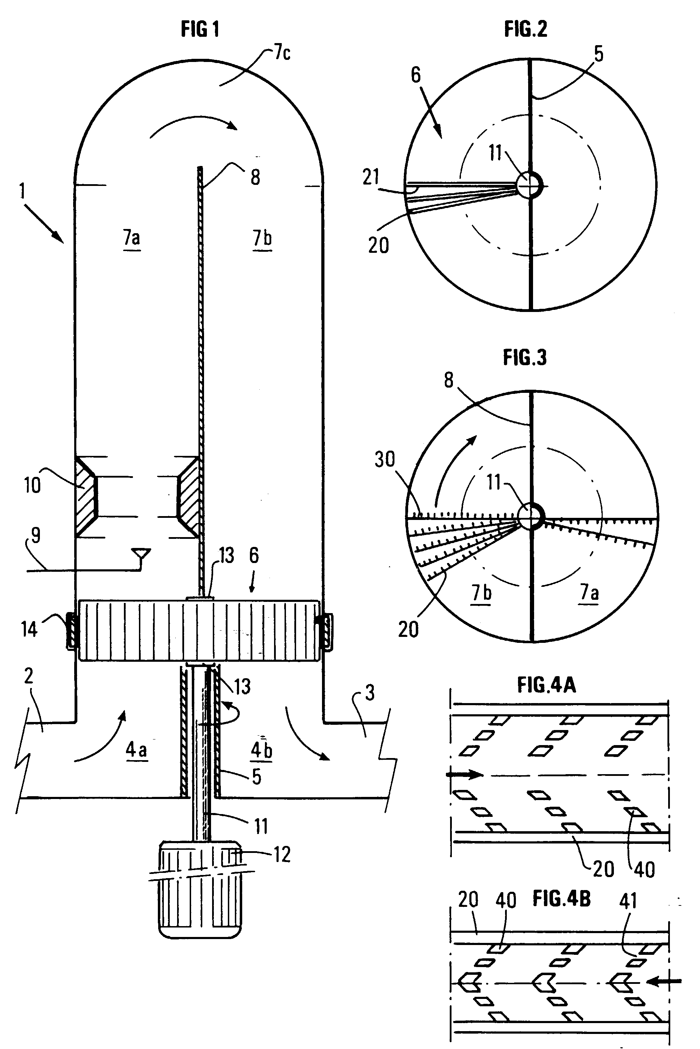

La figure 1 illustre le principe général de l'invention. Le dispositif comprend une enceinte 1 sensiblement cylindrique connectée à des canalisations d'amenée 2 et d'évacuation 3 des gaz. L'extrémité 4 de l'enceinte cylindrique 1 comporte deux zones 4a et 4b partagées par une paroi 5. La zone 4a reçoit les gaz à traiter et peut éventuellement être équipée d'internes non représentés sur la figure, qui permettent d'égaliser le champ des vitesses locales à l'entrée d'une roue 6. La zone 4b sert à l'évacuation des gaz traités.

La roue 6 est placée à proximité immédiate des zones 4a et 4b. Elle est animée d'un mouvement de rotation et supporte les media destinés à capter les particules ou à les restituer.

Au-delà de la roue 6, on trouve la zone 7, qui est la zone réactionnelle proprement dite. Ladite zone est également partagée en deux zones 7a et 7b, par une paroi 8, la communication entre les deux zones se faisant par une zone intermédiaire 7c, qui peut avoir la forme d'une demi sphère par exemple.

Le réactif solide frais est introduit dans la zone 7a, immédiatement en aval de la roue 6, à l'aide d'un ou de plusieurs injecteur(s) 9, suivant les règles classiques connues de l'homme de l'art.

Un dispositif 10, par exemple du type venturi, peut éventuellement être placé en aval de l'injecteur 9, afin d'améliorer et d'accélérer le mélange des particules avec la phase gazeuse. Le mélange gaz-particules parcourt tout d'abord la zone 7a, puis passe dans la zone 7c où il change de direction ; ensuite le flux parcourt la zone 7b. En quittant la zone 7b, le courant gazeux repasse au travers de la roue 6 en rotation. Ladite roue est reliée par un axe 11 à un groupe motorisé 12. Des joints 13 sont préférentiellement montés près de l'axe de la roue 6, sur les parois 5 et 8, de part et d'autre de la roue afin d'éviter le passage de gaz d'un côté à l'autre au niveau de la roue 6.

La roue rotative 6 occupe préférentiellement toute la section de passage de l'enveloppe de sorte que la totalité des gaz doit passer au travers de ladite roue.

En outre, des joints 14 fixés sur la surface interne de l'enveloppe 1, au niveau de ladite roue 6, permettent d'améliorer l'étanchéité du système et forcent ainsi l'ensemble des gaz à passer au travers de la roue 6.

Selon un mode de réalisation de l'invention, la roue peut comprendre un ensemble de panneaux rigides 20 rayonnants et disposés parallèlement à l'écoulement, comme montré schématiquement sur la figure 2.

Les panneaux sont préférentiellement recouverts d'un matériau 21 facilitant la captation ou la restitution des particules sur les panneaux, selon les conditions de fonctionnement.

Ce matériau peut se présenter par exemple sous la forme d'un revêtement ayant une forte rugosité ; il peut aussi être constitué de matières fibreuses organiques, métalliques, céramiques...

Le revêtement 21 peut être présent sur tout ou partie des ailettes 20.

Selon un mode particulier de fonctionnement de l'invention, les parois 5 et 8 ne sont pas positionnées sur l'axe longitudinal de l'enveloppe comme indiqué sur les figures 1 ou 2, mais sont déportées longitudinalement de telle sorte que la zone 7a présente une plus faible section de passage (transversale) que la zone 7b. Ainsi, la rétention des particules en sortie de la zone 7b se fera grâce à des vitesses de circulation des particules modérées, tandis que les gaz à traiter traverseront à grande vitesse la roue 6 et décolleront les particules captées précédemment.

Selon un autre mode de réalisation de l'invention, les panneaux 20 ne sont plus montés de manière rigide sur la roue 6, mais peuvent être individualisés dans leurs déplacements. Ainsi, lorsque chaque panneau passe dans la zone 7a où il est en contact avec le gaz à traiter, il peut être battu par un marteau ou dispositif équivalent afin d'assurer le décrochage des particules. Dans ces conditions, il n'est plus forcément nécessaire d'avoir des vitesses de gaz différentes dans les différentes zones de l'installation.

Conformément à un autre mode de réalisation de l'invention, l'enceinte 1 est positionnée à l'horizontale, de sorte que la roue 6 présente un axe de rotation horizontal comme indiqué à la figure 3. Les parois de séparation 5 et 8 sont alors préférentiellement sensiblement verticales, bien qu'une séparation de la section de passage en deux parties égales ne soit pas forcément nécessaire. Les panneaux 20 sont montés de façon rigide sur ladite roue et sont recouverts, sur une face, de cellules 30 ouvertes à l'écoulement. Lesdites cellules constituent des cavités ouvertes vers le haut quand elles sont exposées au gaz chargé de particules en sortie de la zone réactionnelle 7b et ouvertes vers le bas lorsqu'elles sont balayées par le gaz à traiter. Ce mode de réalisation facilite la captation des particules en sortie de la zone 7b, puisque celles-ci sont piégées au fur et à mesure que le gaz progresse le long des panneaux. Ces particules sont ensuite libérées gravitairement pour être remises en suspension dans le gaz à traiter. Des moyens de frappage peuvent être associés à ce dispositif pour faciliter la libération des particules.

Selon un autre mode de réalisation, tel qu'illustré sur les figures 4a et 4b, la roue 6 peut être constituée de panneaux 20 individualisés auxquels sont fixées de petites grilles perforées 40 inclinées vis-à-vis de la direction de l'écoulement, comme illustré sur ces figures. Des moyens mécaniques appropriés permettent alors de maintenir les panneaux écartés lorsque ceux-ci sont exposés au gaz chargé en particules à la sortie de la zone réactionnelle 7b et de les rapprocher quand ils sont balayés par les gaz à traiter. Dans ces conditions, les particules sont captées dans les zones mortes constituées par les grilles inclinées 40 (figure 4a) dans la zone 7b. Elles sont libérées ensuite par passage des gaz à contre-courant dans les orifices 41 dans la zone 7a.

La roue peut aussi supporter d'autres dispositifs que des panneaux. On peut par exemple avoir des monolithes à faible densité de cellules, dont les parois des canaux seraient recouvertes de matériaux très rugueux.

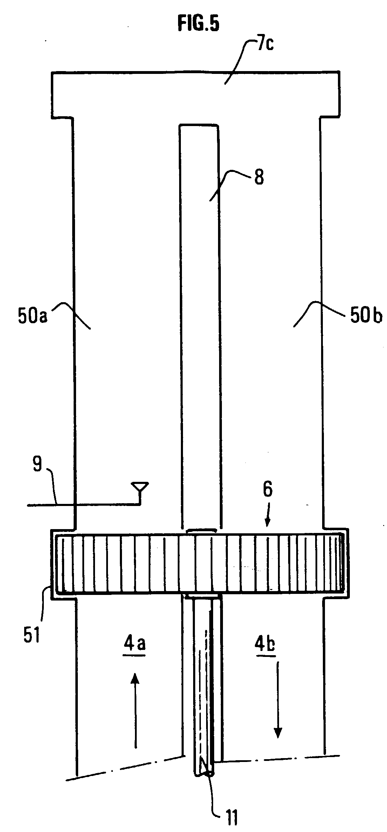

La figure 5 est une illustration d'un autre mode de réalisation où la zone réactionnelle 7 est remplacée par un ensemble de tubes parallèles 50 (non représentés), fixés sur une capacité 51 qui contient la roue 6. Cet ensemble de tubes 50 se subdivise en une première série de tubes 50a qui constitue la première partie de la zone réactionnelle. Chacun de ces tubes 50a est équipé d'un (ou plusieurs) injecteur(s) 9 de réactifs solides. Dans un but de simplification seul l'injecteur a été représenté sur la figure 5. Lesdits tubes débouchent sur une capacité 52, qui sert de départ à la deuxième série de tubes repérés 50b (non représentés) où se poursuit la réaction et qui aboutissent à nouveau à la roue 6. La zone 4 peut aussi être équipée de tubes ou conserver la forme cylindrique de la figure 1. Cet autre mode de réalisation peut avoir comme avantage un meilleur contrôle de la réaction, puisqu'on travaille avec des réacteurs élémentaires (les tubes) de petite taille et de géométrie simple.

En outre la répartition entre les tubes 50a et 50b n'est pas nécessairement symétrique : on peut en effet envisager sans sortir du cadre de l'invention que l'ensemble des tubes 50a occupent une section transversale inférieure à celle occupée par les tubes 50b.

A titre illustratif de ce dernier mode de réalisation de l'invention, les vitesses de circulation des gaz dans les zones 4a et 4b sont respectivement comprises entre 2 et 200 m/s pour la zone 4-a, et entre 2 et 50 m/s pour la zone 4b. Les particules introduites par les injecteurs 9 ont une densité comprise entre 0,1 et 10, et de préférence entre 1 et 3. Leur granulométrie varie entre 0,2 et 100 micromètres, de préférence entre 2 et 30 micromètres.

Les débits de solides sont calculés de façon à avoir des charges, au niveau de l'entrée 4a, comprises entre 0 et 5 kg/Nm³, de préférence entre 0,01 et 0,1 kg/Nm³.

L'épaisseur, c'est-à-dire la hauteur de la roue 6 mesurée selon l'axe longitudinal, est comprise entre 0,1 et 5 m, et de préférence entre 95 et 1,5 m.

La vitesse de rotation de la roue 6 est comprise entre 0,1 et 10 tr/min.

Les espacements angulaires entre panneaux 20 à l'extrémité varient entre 0,1 et 50 cm, et de préférence entre 1 et 10 cm.

En outre, la vitesse de rotation de la roue 6 peut varier grâce au moteur 12. Ainsi, en faisant varier la vitesse de rotation de la roue, il est possible de contrôler mieux et plus facilement le débit de solides recyclé.

## Revendications

1. Dispositif de traitement de fumées issues notamment d'usines d'incinération comprenant :
- une première zone (7a) ayant une entrée (4a) pour les fumées non traitées et une sortie vers une zone intermédiaire (7c), l'écoulement y étant essentiellement longitudinal ; ladite première zone comprenant des moyens (9) d'injection d'un absorbant ;
- la zone intermédiaire (7c) dans laquelle l'écoulement change de direction;
- une deuxième zone (7b) ayant une entrée pour les gaz sortant de la zone intermédiaire (7c) et une sortie (4b) pour les gaz traités, l'écoulement étant sensiblement longitudinal dans ladite deuxième zone;
caractérisé en ce qu'il comprend en outre un moyen rotatif (6) disposé à la fois à l'entrée de la première zone et à la sortie de la deuxième zone et permettant de capter les particules véhiculées dans les fumées et de les réintroduire à l'entrée de la première zone.

2. Dispositif selon la revendication 1, caractérisé en ce que le moyen rotatif (6) présente un ensemble d'ailettes radiales (20) placées parallèlement à l'écoulement dans la première et/ou la deuxième zone.

3. Dispositif selon la revendication 2, caractérisé en ce que les ailettes sont recouvertes d'un matériau (21) susceptible de capter et de restituer des particules, tel un matériau rugueux.

4. Dispositif selon l'une quelconque des revendications 2 ou 3, caractérisé en ce que l'axe longitudinal du dispositif est horizontal et les première et deuxième zones (7a, 7b) sont disposées l'une à côté de l'autre.

5. Dispositif selon la revendication 4, caractérisé en ce que les ailettes (20) sont recouvertes sur l'une au moins de leurs faces, de cellules (30).

6. Dispositif selon la revendication 5, caractérisé en ce que les cellules (30) sont orientées de telle sorte qu'elles sont ouvertes vers le bas dans la première zone (7a) et ouvertes vers le haut dans la deuxième zone (7b).

7. Dispositif selon l'une quelconque des revendications 1 à 3, caractérisé en ce que les ailettes (20) sont munies de grilles (40) inclinées vis-à-vis du sens de l'écoulement.

8. Dispositif selon la revendication 7, caractérisé en ce qu'il comprend en outre des moyens destinés à faire varier l'espacement angulaire entre les ailettes (20) selon qu'elles se trouvent dans la première ou dans la deuxième zone du dispositif.

9. Dispositif selon l'une quelconque des revendications précédentes, caractérisé en ce qu'il comprend en outre au moins un faisceau de tubes (50a, 50b) disposés parallèlement à l'écoulement, dans l'une et/ou l'autre des première ou deuxième zones.

10. Dispositif selon l'une quelconque des revendications précédentes, caractérisé en ce qu'il comprend une enveloppe cylindrique (1) séparée longitudinalement par au moins une première paroi de séparation (8) délimitant les première et deuxième zones, ladite paroi étant placée en aval dudit moyen rotatif (6).

11. Dispositif selon la revendication 10, caractérisé en ce qu'il comprend en outre une deuxième paroi de séparation (5) disposée en amont du moyen rotatif (6) et dans le même plan que la première paroi de séparation (8).

12. Dispositif selon l'une quelconque des revendications précédentes, caractérisé en ce que le moyen rotatif (6) est actionné par un moteur à vitesse variable (12).

13. Dispositif selon l'une quelconque des revendications précédentes, caractérisé en ce que la première zone est équipée de moyens tel que venturi (10) placé en aval des moyens d'injection (9) et destiné à améliorer le mélange des particules injectées par les moyens d'injection (9) avec la phase gazeuse.
